# EUROPÄISCHE PATENTSCHRIFT

(11) **EP 2 015 652 B1**
(45) Veröffentlichungstag und Bekanntmachung des Hinweises auf die Patenterteilung: **28.03.2012**
(21) Anmeldenummer: 07728855.3
(22) Anmeldetag: 07.05.2007
(51) Int. Cl.: A47B 95/04, A47B 47/04, A47B 96/20

(54) **ZUSATZELEMENT FÜR EIN MÖBELTEIL AUS EINER LEICHTBAUPLATTE, MÖBELTEIL UND MÖBEL**
ADDITIONAL ELEMENT FOR A FURNITURE PART MADE OF A LIGHTWEIGHT STRUCTURAL PANEL, FURNITURE PART AND PIECE OF FURNITURE
ÉLÉMENT SUPPLEMENTAIRE POUR UNE PARTIE DE MEUBLE CONSTITUÉE D'UN PANNEAU DE CONSTRUCTION LÉGER, PARTIE DE MEUBLE ET MEUBLE

(30) Priorität: 11.05.2006 DE 102006022313
(43) Veröffentlichungstag der Anmeldung: 21.01.2009
(73) Patentinhaber: Fritz Egger GmbH & Co. OG, 3105 Unterradlberg (AT)
(72) Erfinder: WEISS, Alexander, 6391 Fieberbrunn (AT); RIEPERTINGER, Manfred, 83093 Bad Endorf (DE)
(74) Vertreter: Cohausz & Florack
(86) Internationale Anmeldenummer: PCT/EP2007/054402
(87) Internationale Veröffentlichungsnummer: WO 2007/131903

(56) Entgegenhaltungen:
- EP-A- 0 330 748
- DE-A1- 2 008 785
- DE-A1- 3 244 398
- DE-U- 6 923 049
- DE-U1-202004 012 141
- GB-A- 2 289 700

## Beschreibung

Die vorliegende Erfindung betrifft eine Vorrichtung zur Anbindung einer Rückwand an Möbelteile aus Leichtbauplatten.

Als Beispiele sind im Stand der Technik DE 20 2004 012 141 U1 und DE 6923049 U bekannt.

Leichtbauplatten (LBPL) sind aus dem Stand der Technik hinlänglich bekannt. Auch im Möbel- und Innenausbau werden diese seit langer Zeit in vielfältiger Weise verwendet. Haupteinsatzgebiet war und ist hier speziell der Türenbau. So ist es vor allem bei Zimmertüren, die also geringen Anforderungen hinsichtlich des Wärme- und Schallschutzes unterliegen, üblich ein Rahmenelement mit einem Wabenkern beidseitig zu beplanken und dieses dann mit den entsprechenden Bohrungen, Fräsungen, etc. zu einem Türelement weiterzuverarbeiten.

Im gehobenen Einrichtungsbereich wurden ebenfalls Leichbauplatten im Möbelbau einzusetzen, weil durch deren Einsatz sehr große Wandstärken realisiert werden können, die besondere gestalterische Möglichkeiten bieten. In jüngerer Zeit werden auch bei Massenmöbeln verstärkt Leichtbauplatten verwendet, sodass auch ein Einsatz auf breiterem Gebiet wirtschaftlich möglich wird. Damit sind einer breiteren Schicht von Endverbrauchern die verschiedenen Vorzüge der Leichtbauplatten zugängig.

Der Hersteller von Möbeln braucht Leichtbauplatten heute nicht mehr selber herzustellen, wie dies früher der Fall war. Mehrere Arbeitsgänge waren dazu notwendig. Zunächst musste ein Rahmen hergestellt werden, eventuell mit mehreren Querriegeln, auf den dann die Decklagen aufgebracht wurden und der die verschiedenen Beschläge aufzunehmen hatte. Zwischen den Decklagen wurden Leichtfaserplatten, mineralische Dämmwolle, Kartonwaben oder ähnliches eingebracht. Damit wurde dem Element mehr Kompaktheit und eventuell auch eine verbesserte Stabilität verliehen. Zumeist mussten in separaten Arbeitsgängen die Deckschichten auch noch aufwändig oberflächenbehandelt werden. So waren als Decklagen furnierte oder anderweitig beschichtete Hartfaserplatten üblich, wobei das fertige Element auch erst durch abschließendes Lackieren seine endgültige Oberfläche erhalten kann.

Heute werden Leichtbauplatten in zunehmendem Maß auch industriell gefertigt. Dazu wird eine leichte Mittellage mit Deckplatten versehen, zumeist durch Klebung, so dass ein großformatiger, rahmenloser Verbund entsteht. Je nach geforderter Stabilität der Platte werden unterschiedlich dicke Deckplatten, zumeist aus einem Holzwerkstoff wie Span- oder Faserplatte, eingesetzt. Die verwendeten Platten können bereits beschichtet sein, also etwa mit einem Laminat, einer Farbe, einem Druck mit Versiegelung, einer Melaminharzschicht, einem Furnier, etc. versehen sein. Als Mittellagen werden Kartonwaben oder Schaumstoffplatten bevorzugt. Für bestimmte Verwendungszwecke sind möglich Weise auch Wabenmaterialien aus anderen Materialien als Papier oder Karton sinnvoll. So können dafür dünnste Plattenmaterialien oder auch dünnwandiges Metall wie Aluminium eingesetzt werden. Es ist aber auch möglich als Mittellagen leichte Holzwerkstoffe wie etwa entsprechende Spanplatten oder Faserplatten oder auch Massivholz geringer Dichte, wie Balsaholz, einzusetzen. Mit entsprechenden Ausnehmungen versehen sind grundsätzlich alle Materialien zum Einsatz als leichte Mittellage möglich. So werden dafür beispielsweise auch Holzarten herangezogen, die zwar nicht besonders geringes Gewicht aufweisen, dafür aber gut verfügbar sind und sich gut mit zerspanenden Werkzeugen bearbeiten lassen. Auch sind leichte Mittellagen aus Halmbündeln, die miteinander verbunden zu flächigen Gebilden aufgeschnitten werden, sodass dann die Länge der Halmabschnitte der Dicke der Mittellage entspricht, bekannt.

Die so hergestellten Platten werden dann in die gewünschte Größe aufgeteilt. Je nach vorgesehenem Einsatz der erhaltenen Elemente werden diese dann mit Kanten versehen oder ein zumindest teilweise umlaufender Rahmen wird nachträglich eingebracht. Dies geschieht durch Ausfräsen des Kantenbereichs und nachfolgendes Einkleben eines Rahmenprofils, das wiederum zumeist aus einem Holzwerkstoff besteht. Durch eine entsprechende Profilierung der Kantenausfräsung ist es dabei auch möglich eine Kraft- und/oder formschlüssige Fixierung zu erreichen. Letzteres wird erreicht, indem ein komplementär geformtes Profil durch elastische Verformung der verbliebenen Deckplattenschicht formschlüssig gehalten wird. In vorteilhafter Weise können Kraft- und/oder Formschluss und eine Klebeverbindung kombiniert werden.

Werden wie beschrieben nachträglich Rahmenleisten im Kantenbereich der zugeschnittenen Elemente eingebracht, hat das den Vorteil, dass der Einsatz herkömmlicher Lösungen zur Anbringung von Beschlägen bzw. die Verwendung herkömmlicher, aus dem Möbelbau bekannter Befestigungsmittel möglich ist. Auch können solche Kanten mit beliebigen Profilen versehen werden. Ein sogenanntes Post- oder Softforming ist somit möglich, das heißt, dass die Oberflächenbeschichtung um die profilierte Kante gezogen wird (Postforming) oder dass die profilierte Kante mit einer separaten Laminatbeschichtung (Softforming) versehen wird.

Das aufwändige, nachträgliche Einbringen eines Rahmenprofils ist aber nicht erforderlich. So ist es je nach Beschaffenheit der leichten Mittellage und der Plattendicke möglich, im Bereich der Kanten lediglich eine dekorative Kante anzubringen, gegebenenfalls diese mit einer Blindkante zu hinterlegen. Allerdings sind bei solchen Elementen, wenigstens soweit diese fest mit anderen Teilen verbunden werden müssen, besondere Vorkehrungen zu treffen, da hier kein Material zur Verfügung steht, in dem Schrauben oder andere Befestigungsmittel Halt finden können. Verschiedene Lösungen sind dafür bereits gefunden worden. Diese bedienen sich vornehmlich des Dübelprinzips, eventuell auch mit einer zusätzlichen Verklebung oder es werden die verschiedenen Beschläge alleine durch eine Verklebung mit einer Deckplatte befestigt. Letzteres hat allerdings den Nachteil, dass zu übertragende Kräfte von der einen Deckplatte über die leichte Mittellage in die gegenüberliegende Decklage übertragen werden müssen. Damit können mit solchen Lösungen in der Regel nur geringe Krafteinleitungen erfolgen. Daneben sind Klebeverbindungen nicht wiederholt füg- und lösbar. Trotzdem bieten sich für den Verarbeiter von rahmenlosen Wabenplatten genügend Möglichkeiten die erforderlichen Befestigungen vorzunehmen.

Es ist allerdings bis dato ein ungelöstes Problem, Möbel deren im Wesentlichen senkrecht angeordnete Häupter und deren im Wesentlichen horizontal ausgerichtete Böden aus rahmenlosen Wabenplatten realisiert sind, in befriedigender Weise mit einer Rückwand zu versehen. Neben der grundsätzlichen Notwendigkeit aus Gründen der Optik, der Gebrauchstauglichkeit und der Hygiene, kommt der Rückwand aber die wesentliche Bedeutung zu, das Möbel insgesamt zu stabilisieren, auch wenn Möbelrückwände in der Regel lediglich 4 bis 8 mm dick sind. So erhalten die allermeisten Möbelkonstruktionen erst nach Einbau der Rückwand deren erforderliche Standfestigkeit. Bisher hat der Möbelbau mit Leichtbauplatten daher stets Lösungen eingesetzt, die auch bei herkömmlichen Konstruktionen angewendet wurden, damit aber nie zu wirtschaftlich und technisch befriedigenden Lösungen geführt haben.

So wurde beispielsweise auf den Einsatz rahmenloser Leichtbauplatten verzichtet, nur um im Randbereich eine Nut einfräsen zu können, in die dann die Rückwand eingeschoben wurde. Auch wurde im Randbereich eine spezielle Verstärkung der leichten Mittellage vorgenommen, um wiederum so vorgehen zu können. Weitere Lösungen bestehen im Einsatz von winkelförmigen Beschlagsteilen, deren einer Schenkel durch Schrauben oder Kleben mit Haupt oder Boden verbunden wird, und dessen anderer Schenkel mit einer Clipsvorrichtung oder einem Haken versehen ist, die dann in einer entsprechend vorgefertigte Bohrung der Rückwand eingreift. Bei der zuletzt angeführten Lösung sind aufwändige Schraub- und Bohrarbeiten durchzuführen, die lediglich zu punktförmiger Befestigung führen und Beschlagsteile sichtbar bleiben lassen.

Die aus dem Stand der Technik bekannten Lösungen zur Befestigung einer Rückwand bei einem Möbel aus rahmenlosen Leichtbauplatten sind also in wirtschaftlicher, technischer und ästhetischer Hinsicht unbefriedigend.

Der Erfindung liegt daher das technische Problem zugrunde, ein Zusatzelement, ein Möbelteil sowie ein damit hergestelltes Möbel anzugeben, bei denen eine Rückwand mit einer rahmenlosen Leichtbauplatte in einfacher Weise verbunden werden kann.

Das zuvor aufgezeigte technische Problem wird durch ein Zusatzelement, durch ein aus einer Leichtbauplatte bestehendem Möbelteil mit einem Zusatzelement und durch ein Möbel mit einem Möbelteil mit Zusatzelement gelöst.

Erfindungsgemäß ist erkannt worden, dass durch eine geeignete Ausgestaltung eines Zusatzelementes und einer festen Verbindung des Zusatzelementes mit der Leichtbauplatte in überraschend einfacher Weise eine Rückwand mit dem Möbelteil als Teil eines vollständigen Möbels verbunden werden kann. In dieser Weise kann der Möbelaufbau mit Leichtbauplatten mit Integration einer dünnen Rückwand realisiert werden, ohne dass es einer komplizierten Bearbeitung der Leichtbauplatte bedarf.

Gemäß einer ersten Lehre der Erfindung wird das technische Problem durch ein Zusatzelement zur Anbindung einer Rückwand an Möbelteile aus Leichtbauplatten mit mindestens einer Verbindungsfläche für eine Befestigung an mindestens einer Deckplatte des Möbelteils und mit mindestens einem Aufnahmekanal zur Aufnahme des Randes der Rückwand gelöst. Dieses Zusatzelement bringt trotz des sehr einfachen Aufbaus den zuvor beschriebenen Vorteil einer überraschend einfachen Anbindung und Befestigung einer dünnen Rückwand mit dem Möbelteil. Denn das Zusatzelement weist eine Form mit Aufnahmekanal auf, die an sich nicht in einer Leichtbauplatte an sich realisiert werden kann.

Es gibt grundsätzlich zwei verschiedenen Ausgestaltungen des Zusatzelementes. Zum einen kann das Zusatzelement an die Breite der Schmalfläche der Leichtbauplatte angepasst sein. Somit erfüllt das Zusatzelement nicht nur die Funktion der Befestigung der dünnen Rückwand mit der Leichtbauplatte, sondern stellt gleichzeitig auch einen geeigneten seitlichen Abschluss der Leichtbauplatte dar.

Dabei ist in vorteilhafter Weise die Form des Zusatzelements an die Form der Schmalfläche der Leichtbauplatte angepasst. Durch entsprechende Vorarbeiten kann die Seitenfläche der Leichtbauplatte mit einem Aufnahmeprofil versehen werden, in das dann das Zusatzelement eingefügt und ggf. verleimt oder anderweitig befestigt wird.

Zum anderen kann das Zusatzelement für ein zumindest teilweises Integrieren in eine der Deckschichten angepasst sein. Zum Verbinden des Zusatzelementes mit der Leichtbauplatte wird dann eine Nut in eine der Deckplatten eingearbeitet, in die dann das Zusatzelement eingesetzt und fixiert wird.

Dazu weist das Zusatzelement in bevorzugter Weise eine Nut mit Nutflanken und seitlich davon erstreckende Flansche auf. Entlang der Nutflanken und/oder entlang der Flansche wird das Zusatzelement mit der Deckschicht verklebt.

Insbesondere stabilisiert das Zusatzelement den Bereich der Deckplatte, in dem die Nut in die Deckplatte eingearbeitet wurde. Besonders bei dünnen Deckplatten gleicht die in die Deckplatte eingearbeitete Nut einem Trennschnitt. In diesem Fall dient das Zusatzelement in besonderem Maße zur Stabilisierung, da die sich zu beiden Seiten des Zusatzelements befindenden Teile der Deckplatte nicht mehr einstückig miteinander sondern lediglich über die Mittellage verbunden sind. Durch das Zusatzelement werden die beiden Teile der Deckplatte zusätzlich miteinander verbunden.

Das Zusatzelement kann nur einen Aufnahmekanal an einer Seite aufweisen. Darüber hinaus können mehrere parallel angeordnete Aufnahmekanäle auf einer Seite vorgesehen sein. Ebenso können jeweils ein oder mehrere Aufnahmekanäle an zwei Seiten vorgesehen sein. Dieses ermöglicht ein Anbringen einer dünnen Rückwand an beiden Seiten des Zusatzelementes, was insbesondere bei Mittelhäuptern von Möbeln von Vorteil ist.

Darüber hinaus kann in bevorzugter Weise eine Abdeckung für mindestens einen Aufnahmekanal, vorzugsweise für alle Aufnahmekanäle vorgesehen sein. Dabei kann die Abdeckung zumindest teilweise entfernbar sein. Somit sind die Aufnahmekanäle nicht zu erkennen, wenn sie nicht zur Aufnahme einer Rückwand verwendet werden.

Für ein vereinfachtes Einfädeln der Rückwand in den Aufnahmekanal kann der Aufnahmekanal trichterförmig ausgebildet sein.

Ebenso kann ein federndes Element im Aufnahmekanal für ein Vorspannen der Rückwand in Richtung der dem Rand abgewandten Seite der Leichtbauplatte vorgesehen sein. Dadurch wird die Rückwand so an das Zusatzelement gedrückt, dass die beim späteren Gebrauch des Möbelteils hauptsächlich sichtbaren Teile des Zusatzelements und der Rückwand miteinander ein besonders geringes und somit ästhetisch ansprechendes Spaltmaß aufweisen.

Das oben aufgezeigte technische Problem wird auch durch ein Möbelteil mit zwei Deckplatten und mit einer Mittellage gelöst, die zusammen eine Leichtbauplatte bilden, wobei ein Zusatzelement über mindestens eine Verbindungsfläche an mindestens einer Deckplatte befestigt ist und wobei das Zusatzelement mindestens einen Aufnahmekanal zur Aufnahme des Randes einer Rückwand aufweist.

Das Zusatzelement ist dabei bevorzugt entsprechend einer der zuvor aufgezeigten Ausführungsbeispiele ausgebildet.

In bevorzugter Weise weist die Leichtbauplatte ein Rahmenprofil auf, an dem das Zusatzelement zumindest teilweise befestigt ist. Somit wird das Zusatzelement in den Aufbau der Leichtbauplatte mittels des Rahmenprofil integriert und zuverlässig verbunden.

Bei einer anderen Alternative weist die Leichtbauplatte im Bereich der Seitenkante eine Nut zur Aufnahme des Zusatzelementes auf. Dazu kann eine der Deckschichten mit einem Trennschnitt versehen sein, so dass sich das Zusatzelement bis in den Bereich der Mittellage hinein erstreckt. Ebenso kann die Deckplatte eine Nut aufweisen, so dass das Zusatzelement vollständig in der Deckplatte aufgenommen ist. Ist ein Trennschnitt vorgesehen, so bildet dieser zusammen mit der Mittellage als Nutgrund ebenfalls eine Nut. Das Zusatzelement kann dann in der Nut angeordnet und fixiert, insbesondere verklebt oder mechanisch befestigt werden.

Eine besonders effektive Herstellung des Zusatzelementes mit werkseitiger Befestigung an der Leichtbauplatte kann durch Anextrusion des Zusatzelementes direkt an die Leichtbauplatte realisiert werden.

Daneben ist es möglich, das Zusatzelement stangenweise oder als Endlosware herzustellen und werkseitig oder beim Aufbau des Möbels mit den Leichtbauplatten zu verbinden. Dabei kann das Zusatzelement wahlweise aus einen Kunststoff oder aus einem, vorzugsweise leichten Metall hergestellt sein.

Das oben aufgezeigte technische Problem wird ebenfalls erfindungsgemäß durch ein Möbel mit mindestens einem der zuvor beschrieben Alternativen eines Möbelteils gelöst.

Die Erfindung wird im Folgenden anhand von Ausführungsbeispielen näher erläutert, wozu auf die beigefügte Zeichnung Bezug genommen wird. In der Zeichnung zeigen
- Fig. 1a-d: Ausführungsbeispiele für Möbelteile als Leichtbauplatten mit in den Schmalseiten integrierten Zusatzelementen, wobei die Zusatzelemente jeweils eine Rückwand in dem Aufnahmekanal aufnehmen,
- Fig. 2a-b: Ausführungsbeispiele für Möbelteile als Leichtbauplatten mit in der oberen Deckplatte integrierten Zusatzelementen und jeweils damit verbundenen Rückwänden,
- Fig. 3: ein Ausführungsbeispiel eines Möbelteils als Leichtbauplatte mit angesetzten Zusatzelement und darin aufgenommener Rückwand,
- Fig. 4: ein Ausführungsbeispiel eines Möbelteils als Leichtbauplatte mit einem Zusatzelement mit einem zweitseitigen Aufnahmekanal und darin aufgenommener Rückwand und
- Fig. 5: ein Ausführungsbeispiel eines Möbelteils als Leichtbauplatte mit angesetzten Zusatzelement mit einem federnden Element für ein Vorspannen der Rückwand.

In den nachfolgend ausführlich erläuterten Figuren werden gleiche Bauteile mit gleichen Bezugszeichen bezeichnet, die in ihrer Funktion übereinstimmen, jedoch in ihrer konkreten Ausgestaltung voneinander abweichen können.

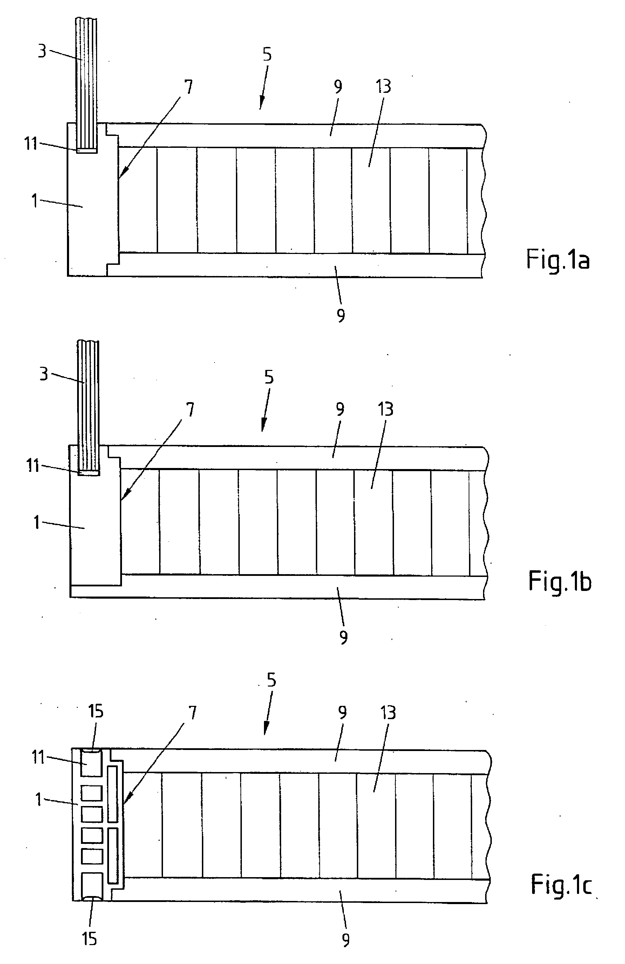

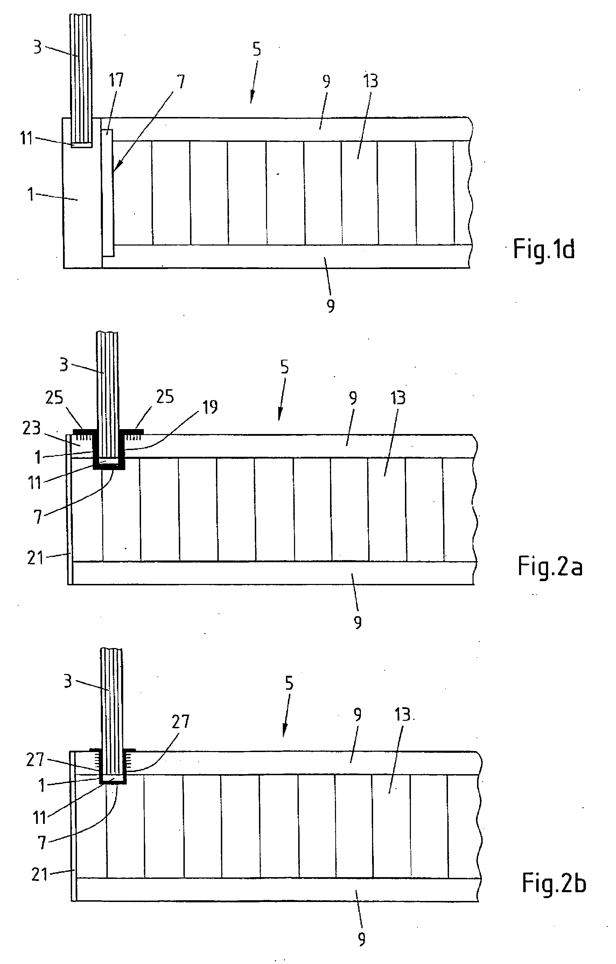

Fig. 1 zeigt ein Zusatzelement 1 zur Anbindung einer Rückwand 3 an Möbelteile 5 aus Leichtbauplatten 5. Das Zusatzelement 1 weist eine Verbindungsfläche 7 für eine Befestigung an mindestens einer Deckplatte 9 des Möbelteil 5 und einen Aufnahmekanal 11 zur Aufnahme des Randes der Rückwand 3. Zwischen den beiden Deckplatten 9 ist eine Mittellage 13 angeordnet.

Dabei ist es möglich das Zusatzelement 1 in verschiedenen Ausformungen zu gestalten, um es hinsichtlich der Verbindung mit der Leichtbauplatte 5 zu optimieren. Lediglich die Form des Aufnahmekanals 11 ist auf die Dicke der vorgesehenen Rückwand 3 abzustimmen. Üblich sind hier Dicken von etwa 6 mm, es sind aber auch alle anderen Dicken, wie sie für eine Rückwand 3 eines Möbels angewendet werden, möglich.

Das in Fig. 1a dargestellte Zusatzelement 1 ist in Form einer Seitenkante ausgeführt, die dann neben der Funktion der Aufnahme der Rückwand 3 auch die Aufgabe übernimmt, die Schmalfläche der Leichtbauplatte zu verschließen und gegebenenfalls auch den Verbund zwischen den Deckplatten 9 zu stabilisieren. Zur Befestigung des Zusatzelements 1 ist eine einfache symmetrische Ausfräsung der Seitenkante vorgesehen, wie in Fig. 1a gezeigt ist.

Es kann aber auch durch eine unsymmetrische Fräsung, wie in Fig. 1b dargestellt ist, die äußere Deckplatte 9 bis ganz zur Seitenkante verbleiben, womit eine optisch verbesserte Ausführung möglich ist.

Natürlich ist es auch hier möglich, das Zusatzelement 1 und die Seitenkante der Leichtbauplatte 5 derart zu profilieren, dass wiederum eine formschlüssige Verbindung entsteht. Die formschlüssige Verbindung kann dabei als alleiniges Verbindungsmittel wirken oder in Verbindung mit einer Verklebung vorgesehen sein.

Das erfindungsgemäße Zusatzelement 1 kann neben einer vollvolumigen Ausführung auch als Hohlkammerprofil ausgeführt sein, wie es in Fig. 1c dargestellt ist. Zusätzlich ist es hier vereinfacht möglich, den Aufnahmekanal 11 mit einem ablösbaren Abdeckung 15 abzudecken. So kann das Zusatzelement 1 an beiden Seiten (in Fig. 1c oben und unten) mit einem Aufnahmekanal 11 versehen sein, wobei die Aufnahmekanäle 11 dann je nach gewüschter Lage der Rückwand 3 zur Leichtbauplatte 5 wahlweise freigegeben werden kann. Durch entsprechende Profilausbildung ist es möglich den Aufnahmekanal 11 ohne Anwendung von Werkzeugen zu öffnen.

Aus Gründen der mechanischen Stabilität kann es jedoch erforderlich sein, um das Zusatzelement 1 mit der Leichtbauplatte 5 zu verbinden, die Abdeckung derart anzubinden, dass der Einsatz eines entsprechenden Werkzeugs zum Öffnen bzw. Entfernen der Abdeckung 15 notwendig ist.

Ein weiterer Vorteil des Zusatzelementes 1 gemäß Fig. 1c besteht darin, dass ein derartiges Zusatzelement 1 wahlweise für Mittel- oder Seitenhäupter eines Möbels verwendet werden kann. Es müssen nur stets die jeweiligen Aufnahmekanäle 11 oder bei Mittelhäuptern beide Aufnahmekanäle 11 zu beiden Seiten geöffnet werden. Zusätzlich lässt eine solche Ausgestaltung eine Leitungsführung in dem nicht für die Positionierung der Rückwand genutzten abgedeckten Aufnahmekanal 11 zu.

Nach Fig. 1d ist das Zusatzelement 1 an einem zuvor in die Leichtbauplatte 3 integrierten Rahmenprofil 17 befestigt. So wird es für den Möbelhersteller möglich mit einer herkömmlichen Kantenanleimmaschine ein entsprechend geformtes Zusatzelement 1 an der Seitenkante der Leichtbauplatte 5 anzubringen. Durch die Vermeidung spezieller Arbeitsmaschinen gelingt es so in wirtschaftlicher Weise Leichtbauplatten zu Möbeln zu verarbeiten.

Gemäß Fig. 2a ist das Zusatzelement 1 mit Aufnahmekanal 11 nicht an der Seitenkante der Leichtbauplatte 5 befestigt, sondern das Zusatzelement ist in eine dafür vorgesehene Nut 19 im Randbereich der Deckplatte 9 eingebracht. Die Funktion des hier eingebrachten Zusatzelements 1 besteht darin, den Bereich der mit einer dekorativen dünnen Kante 21 versehenen Seitenkante zu stabilisieren. Ohne das Zusatzelement 1, das hier wiederum durch Verkleben befestigt ist, würde der verbleibende Rand 23 der oberen Deckplatte 5 nur durch die dünne dekorative Kante 21 gehalten werden. Denn die Rückwand 3 findet in der relativ leichten Mittellage 13 kein ausreichendes Gegenlager, wodurch dieser Bereich der Leichtbauplatte 5 schon bei geringster Belastung ausbrechen würde.

Bei dem in Fig. 2a dargestellten Zusatzelement wird dem Verarbeiter von rahmenlosen Leichtbauplatten 5 eine Möglichkeit an die Hand gegeben, mit der er in einfacher Weise eine technisch und optisch einwandfreie Anbindung der Rückwand 3 an die Leichtbauplatte 5 realisieren kann. Lediglich bei der Verbindung des Zusatzelements 1 mit der Leichtbauplatte 5 ist auf eine ausreichende Festigkeit zu achten.

Je nach Material des Zusatzelements stehen dem Verarbeiter eine Vielzahl von Klebstoffsystemen zur Verfügung, mit denen sich die genannte Festigkeit und erforderliche Dauerhaftigkeit der Klebeverbindung realisieren lässt. Fig. 2a zeigt eine solche Ausgestaltung, wobei hier ein Zusatzelement 1 aus einem Kunststoffmaterial dargestellt ist. Ein kleiner Nachteil könnte hier im Hervortreten des Zusatzelements 1 aus der Ebene der Deckplatte gesehen werden. Dem kann aber bei entsprechender Geometrie und Materialwahl des Zusatzelements 1 begegnet werden.

Während das Zusatzelement 1 in Fig. 2a im Bereich der als Flansche 25 ausgebildeten Verbindungsflächen verklebt sind, ist das in Fig. 2b dargestellte Zusatzelement 1 im Bereich der als Nutflanken 27 ausgebildeten Verbindungsflächen verklebt. In Fig. 2b ist ein Zusatzelement 1 aus Metall dargestellt, das aufgrund seiner geringeren notwendigen Wandstärke und der verkleinert gewählten Auflagefläche an der Oberfläche der Deckplatte eine optisch einwandfreie Lösung ermöglicht.

Stehen optische Ansprüche weniger im Vordergrund, so kann das Zusatzelement 1 nicht in die Deckplatte eingenutet, sondern an deren Oberfläche, vorzugsweise benachbart zur Seitenkante, befestigt werden. Dies kann durch Kleben, aber auch mit Hilfe entsprechender Schrauben oder sonstiger Befestigungsmittel erfolgen.

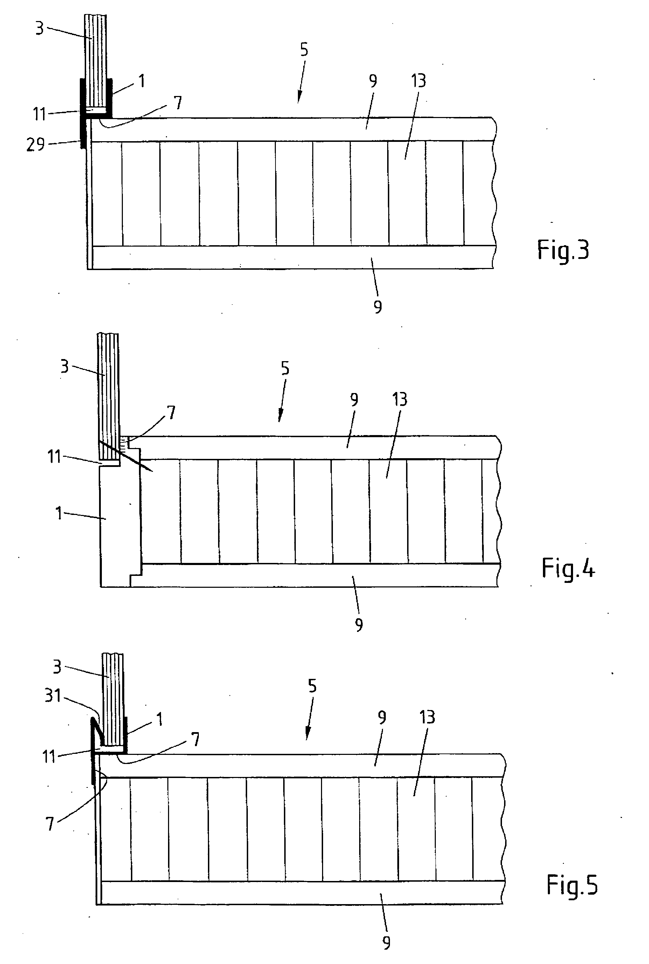

Besonders günstig für die Montage des Zusatzelements ist es, wenn dieses wie in Fig. 3 mit einem zusätzlichen Schenkel 29 versehen ist, der eine exakte Ausrichtung des Zusatzelements 1 an der Seitenkante der Leichtbauplatte 5 ermöglicht. Außerdem wird dadurch eine vergrößerte Kontakt- und damit eine vergrößerte Klebefläche zur Leichtbauplatte 53 ermöglicht.

Ein Aufnahmekanal eines erfindungsgemäßen Zusatzelements 1 muss nicht an drei Seiten geschlossen sein, wie es bei den bisher beschriebenen Ausführungsbeispielend der Fall ist. Gemäß Fig. 4 ermöglicht ein zweiseitig offener Aufnahmekanal 11 eine Rückwand 5 von der Hinterseite des Möbels einzulegen. Vor allem bei sehr hohen Möbeln ist diese Ausgestaltung vorteilhaft, da es platzaufwändig ist, eine Rückwand in das liegende hohe Möbel einzuschieben. Auch wenn eine Person alleine ein Möbel zusammenbauen will, kann diese Ausgestaltung vorteilhaft sein, da es schwierig ist eine Rückwand in Haupt und Boden zu stellen, um dann erst Deckel und weiteres Seitenhaupt zu befestigen. Mit nur zwei Händen einer Person drohen Teile umzufallen und abzustürzen, bevor diese dauerhaft verbunden werden können.

Fig. 4 zeigt weiterhin eine Verklebung und eine mechanische Befestigung des Zusatzelements 1, beispielsweise mittels eines Nagels.

Die Form des Aufnahmekanals kann darüber hinaus die Montage der Rückwand erleichtern. So kann es sinnvoll sein einen Aufnahmekanal trichterförmig, also mit zulaufenden Kanalflanken auszuführen, um die zumeist sehr dünne und damit leicht verbiegbare Rückwand erleichtert im Aufnahmekanal zu positionieren.

Des Weiteren können, wie Fig. 5 zeigt, im Aufnahmekanal 11 ein federndes Element 31, beispielsweise eine federnde Lippe, oder einzelne Federelemente vorgesehen sein, die die Rückwand 3 stets zum umschlossenen Raum hin pressen. Damit wird die Anbindung der Rückwand 3 an das Möbelteil 9 automatisch besser abgedichtet, womit eventuell störend empfundene Fugen in diesem Bereich vermieden werden.

Darüber hinaus kann das federnde Element derart ausgeführt sein, dass sowohl das Positionieren der Rückwand 3 als auch ein Anpressdruck an die möbelseitige Kanalflanke realisiert wird. Fig. 5 zeigt eine entsprechende Ausführungsform.

Grundsätzlich sind für die Herstellung von Zusatzelementen 1 mit Aufnahmekanal 11 die verschiedensten Materialien geeignet. Besonders bevorzugt werden Materialien verwendet, aus denen wirtschaftlich längliche Profile geringer Dimension hergestellt werden können. Neben den verschiedenen Kunststoffmaterialien sind hier Metall, in erster Linie Aluminiumlegierungen zu nennen. Hinsichtlich der Kunststoffmaterialien können diese wegen der geringeren Ansprüche hinsichtlich Farbabweichung und UV-Stabilität aus Recyclingmaterial gewonnen werden. Ökologisch besonders verträglich und wegen der hier besonders guten mechanischen Eigenschaften, wäre die Wahl eines Holz-Kunststoff-Compounds (WPC) vorteilhaft. Diese Materialien bestehen in der Regel aus einem thermoplastischen Kunststoff und einem unterschiedlich hohen Anteil an Holz- oder sonstigen Agrofasern.

Es ist aber nicht zwingend erforderlich, dass ein Zusatzelement 1 in Form einer Stange zur Verfügung gestellt wird. Ebenso kann das Zusatzelement 1 so ausgestaltet werden und/oder das Material des Zusatzelement 1 derart ausgewählt werden, dass das Zusatzelement 1 flexibel genug ist, um gewickelt zu werden. Damit können Zusatzelemente 1 in Rollen bereitgestellt werden. Einerseits ist diese Ausgestaltung beim Transport vorteilhaft und andererseits kann Rollenware leichter in einen automatisierten Herstellungsprozess integriert werden. Durch das Bereitstellen von einem endlosen Material lässt sich dieses mit Kantenanleimmaschinen verarbeiten, wie sie zur üblichen maschinellen Ausstattung im Möbelbau gehören. Eine Verklebung erfolgt hier zumeist mittels Schmelzkleber.

Neben einer Verklebung, bei der zumindest eine der Kontaktflächen wenigstens zum Teil mit Klebstoff versehen wird und anschließend eventuell unter Energiezufuhr und Druck verbunden wird, kann ein Zusatzelement mit Aufnahmekanal eingesetzt werden, das bereits mit einem Klebstoff versehen ist. Damit entfällt für den Verarbeiter das Hantieren mit dem Klebstoff, was mit verschiedenen Vorteilen verbunden ist. So entfällt der mit der Auswahl und Beschaffung entstehende Aufwand, Verschmutzung wird verhindert und die aus der Toxizität der verschiedenen Klebemittel entstehenden Nachteile werden weitgehend vermieden. Als geeignete Klebesysteme können Klebebänder, die mit Abdeckfilmen versehen sind, die dann unmittelbar vor Verarbeitung entfernt werden, oder latente Klebersysteme verwendet werden, die bei oder unmittelbar vor dem Fügen in einen aktiven Zustand überführt werden. So sind etwa Systeme, die durch einfaches Benetzen mit Wasser aktiviert werden können, oder sogenannte mikroverkapselte Klebstoffsysteme verfügbar, bei denen eine Klebstoffkomponente in Mikrokapseln vorliegt, die dann bei entsprechendem Pressdruck brechen und ihren Inhalt freigeben, was dann zu einer Verklebungsreaktion führt.

Neben den bisher angeführten Ausführungsformen, bei denen stets ein Zusatzelement 1 mit Aufnahmekanal 11 zur Verfügung gestellt wurde um dieses dann mit einer Leichtbauplatte 5 zu verbinden, ist es aber auch möglich ein solches Zusatzelement 1 direkt an eine Leichtbauplatte 5 aufzuextrudieren. Mit einem solchen Verfahren können in kostengünstiger Weise beliebige Formen von Zusatzelementen 1 mit Aufnahmekanal 11 für Rückwände 3 bereitgestellt werden. Wahlweise wird es günstig dafür sein, vor dem Aufextrudieren die entsprechende Kante mit einem Profil auszustatten, das die notwendige Stabilisierung übernimmt. Andererseits kann eine Form der anextrudierten Seitenkante gewählt werden, die neben der Funktion des Zusatzelements 1 der Seitenkante der Leichtbauplatte 5 auch die ausreichende mechanische Stabilität verleiht.

## Patentansprüche

1. Möbelteil,
- mit zwei Deckplatten (9) und mit einer Mittellage (13), die zusammen eine Leichtbauplatte (5) bilden,
**dadurch gekennzeichnet,**
- **dass** ein Zusatzelement (1) über mindestens eine Verbindungsfläche (7) an mindestens einer Deckplatte (9) befestigt ist und
- **dass** das Zusatzelement (1) mindestens einen Aufnahmekanal (11) zur Aufnahme des Randes einer Rückwand (3) aufweist.

2. Möbelteil nach Anspruch 1, **dadurch gekennzeichnet, dass** sich das Zusatzelement (1) über die Breite der Schmalfläche der Leichtbauplatte (5) erstreckt.

3. Möbelteil nach Anspruch 1 oder 2, **dadurch gekennzeichnet, dass** die Form des Zusatzelements (1) an die Form des aus den Deckplatten (9) und der Mittellage (13) gebildeten Profils angepasst ist.

4. Möbelteil nach einem der Ansprüche 1 bis 3, **dadurch gekennzeichnet, dass** die Leichtbauplatte (5) ein Rahmenprofil (17) aufweist, an dem das Zusatzelement (1) zumindest teilweise befestigt ist.

5. Möbelteil nach Anspruch 1, **dadurch gekennzeichnet, dass** eine Deckschicht (9) im Bereich der Seitenkante eine Nut (19) zur Aufnahme des Zusatzelementes (1) aufweist.

6. Möbelteil nach Anspruch 5, **dadurch gekennzeichnet, dass** das Zusatzelement (1) mit der Deckschicht (9), vorzugsweise im Bereich von Nutflanken (27), verklebt ist.

7. Möbelteil nach einem der Ansprüche 1 bis 6, **dadurch gekennzeichnet, dass** eine Abdeckung (15) für mindestens einen Aufnahmekanal (11), vorzugsweise für alle Aufnahmekanäle (11) vorgesehen ist.

8. Möbelteil nach Anspruch 7, **dadurch gekennzeichnet, dass** die abdeckung (15) zumindest teilweise entfernbar ist.

9. Möbelteil nach einem der Ansprüche 1 bis 8, **dadurch gekennzeichnet, dass** der Aufnahmekanal (11) trichterförmig ausgebildet ist.

10. Möbelteil nach einem der Ansprüche 1 bis 9, **dadurch gekennzeichnet, dass** im Aufnahmekanal (11) ein federndes Element (31) für ein Vorspannen der Rückwand in Richtung des Grundes des Aufnahmekanals (11) vorgesehen ist.

11. Möbelteil nach einem der Ansprüche 1 bis 10, **dadurch gekennzeichnet, dass** das Zusatzelement (1) durch Extrusion direkt an der Leichtbauplatte (5) befestigt ist.

12. Möbel mit mindestens einem Möbelteil nach einem der Ansprüche 1 bis 11.

## Claims

1. A furniture component,
- with two covering panels (9), and with a central layer (13), which together form a lightweight board (5),
**characterised**
- **in that** an ancillary element (1) is attached via at least one connecting surface (7) to at least one covering panel (9), and
- **in that** the ancillary element (1) has at least one accommodating channel (11) for accommodating the edge of a rear wall (3).

2. The furniture component in accordance with Claim 1,
**characterised in that** the ancillary element (1) extends over the width of the narrow face of the lightweight board (5).

3. The furniture component in accordance with Claim 1 or 2,
**characterised in that** the shape of the ancillary element (1) is matched to the shape of the profile formed from the covering panels (9) and the central layer (13).

4. The furniture component in accordance with one of the Claims 1 to 3,
**characterised in that** the lightweight board (5) has a frame profile (17), to which the ancillary element (1) is at least partly attached.

5. The furniture component in accordance with Claim 1,
**characterised in that** a covering layer (9) has a groove (19) in the region of the side edge for accommodating the ancillary element (1).

6. The furniture component in accordance with Claim 5,
**characterised in that** the ancillary element (1) is adhesively bonded with the covering layer (9), preferably in the region of groove walls (27).

7. The furniture component in accordance with one of the Claims 1 to 6,
**characterised in that** a covering (15) is provided for at least one accommodating channel (11), preferably for all accommodating channels (11).

8. The furniture component in accordance with Claim 7,
**characterised in that** the covering (15) is at least partly removable.

9. The furniture component in accordance with one of the Claims 1 to 8,
**characterised in that** the accommodating channel (11) is designed in the shape of a funnel.

10. The furniture component in accordance with one of the Claims 1 to 9,
**characterised in that** in the accommodating channel (11) a resilient element (31) is provided to pre-load the rear wall in the direction of the base of the accommodating channel (11).

11. The furniture component in accordance with one of the Claims 1 to 10,
**characterised in that** the ancillary element (1) is attached directly to the lightweight board (5) by means of extrusion.

12. An item of furniture with at least one furniture component in accordance with one of the Claims 1 to 11.

## Revendications

1. Elément de meuble,
- comportant deux plaques de recouvrement (9) et une couche centrale (13) qui forment ensemble un panneau alvéolaire (5),
**caractérisé en ce**
- **qu'**un élément complémentaire (1) est fixé par au moins une surface de raccordement (7) à au moins une plaque de recouvrement (9) et
- **que** l'élément complémentaire (1) présente au moins un canal récepteur (11) destiné à recevoir le bord d'une paroi arrière (3).

2. Elément de meuble selon la revendication 1, **caractérisé en ce que** l'élément complémentaire (1) s'étend sur la largeur de la surface de chant de la panneau alvéolaire (5).

3. Elément de meuble selon la revendication 1 ou 2, **caractérisé en ce que** la forme de l'élément complémentaire (1) est adaptée à la forme du profil constitué par les plaques de recouvrement (9) et la couche centrale (13).

4. Elément de meuble selon une des revendications 1 à 3, **caractérisé en ce que** le panneau alvéolaire (5) présente un cadre profilé (17) sur lequel l'élément complémentaire (1) est fixé au moins partiellement.

5. Elément de meuble selon la revendication 1, **caractérisé en ce qu'**une couche de recouvrement (9) présente au niveau de l'arête latérale une rainure (19) destinée à recevoir l'élément complémentaire (1).

6. Elément de meuble selon la revendication 5, **caractérisé en ce que** l'élément complémentaire (1) est collé à la couche de recouvrement (9), de préférence au niveau des flancs de la rainure (27).

7. Elément de meuble selon une des revendications 1 à 6, **caractérisé en ce qu'**il est prévu un recouvrement (15) pour au moins un canal récepteur (11), de préférence pour tous les canaux récepteurs (11).

8. Elément de meuble selon la revendication 7, **caractérisé en ce que** le recouvrement (15) est au moins partiellement amovible.

9. Elément de meuble selon une des revendications 1 à 8, **caractérisé en ce que** le canal récepteur (11) est réalisé en forme d'entonnoir.

10. Elément de meuble selon une des revendications 1 à 9, **caractérisé en ce qu'**il est prévu dans le canal récepteur (11) un élément élastique (31) pour précontraindre la paroi arrière en direction du fond du canal récepteur (11).

11. Elément de meuble selon une des revendications 1 à 10, **caractérisé en ce que** l'élément complémentaire (1) est fixé par extrusion directement sur le panneau alvéolaire (5).

12. Meuble comportant au moins un élément de meuble selon une des revendications 1 à 11.
